# EUROPEAN PATENT SPECIFICATION

(11) **EP 1 102 436 B1**
(45) Date of publication and mention of the grant of the patent: **10.12.2008**
(21) Application number: 99931458.6
(22) Date of filing: 21.07.1999
(51) Int. Cl.: H04L 12/28, H04L 12/56

(54) **RADIO COMMUNICATION DEVICE FOR RADIO PACKET COMMUNICATION SYSTEM**
FUNKKOMMUNIKATIONSEINRICHTUNG FÜR EIN FUNK-PAKETKOMMUNIKATIONSSYSTEM
DISPOSITIF DE RADIOCOMMUNICATION POUR SYSTEME DE RADIOCOMMUNICATION PAR PAQUETS

(30) Priority: 21.07.1998 JP 20568298
(43) Date of publication of application: 23.05.2001
(73) Proprietor: NEC CORPORATION, Minato-ku, Tokyo 108-8001 (JP)
(72) Inventor: ISHII, Kenichi, Tokyo 108-8001 (JP); OSAWA, Tomoki, Tokyo 108-8001 (JP)
(74) Representative: Wenzel & Kalkoff
(86) International application number: PCT/JP1999/003896
(87) International publication number: WO 2000/005843

(56) References cited:
- EP-A- 0 737 018
- JP-A- 8 256 153
- HAAS Z J: "On the performance of a medium access control scheme for the reconfigurable wireless networks" MILCOM 97 PROCEEDINGS MONTEREY, CA, USA 2-5 NOV. 1997, NEW YORK, NY, USA,IEEE, US, vol. 3, 2 November 1997 (1997-11-02), pages 1558-1564, XP010260746 ISBN: 0-7803-4249-6
- "Universal Mobile Telecommunications System (UMTS); UMTS Terrestrial Radio Access (UTRA); Concept evaluation (UMTS 30.06 version 3.0.0)" TR 101 146 V3.0.0, December 1997 (1997-12), pages 144-172, XP002265518
- TOH C-K: "ASSOCIATIVITY-BASED ROUTING FOR AD-HOC MOBILE NETWORKS" WIRELESS PERSONAL COMMUNICATIONS, KLUWER ACADEMIC PUBLISHERS, NL, vol. 4, no. 2, March 1997 (1997-03), pages 103-139, XP000728588 ISSN: 0929-6212

## Description

### TECHNICAL FIELD:

The present invention relates to a radio communication apparatus in a radio packet communication system and, more particularly, to a radio communication apparatus in a radio packet communication system constituted by a plurality of radio stations and having a plurality of radio channels (to be simply referred to as channels hereinafter).

### BACKGROUND ART:

A radio LAN system is one of radio packet communication systems that have recently been standardized as systems for implementing high-speed data transmission by radio. In this radio LAN system, a plurality of radio stations form one radio link and share one channel by CSMA/CA (Carrier Sense Multiple Access with Collision Avoidance). In the radio LAN system, if adjacent radio links use the same channel, the throughput decreases due to cochannel interference. Conventionally, in the radio LAN system, as a technique of preventing interference from radio waves forming different radio links, the technique disclosed in Ishi et al., "Proposal of Packet DCA for Radio LAN" (Proceedings of 1996 IEICE Society Conference B-652) (reference 1) is available.

The technique disclosed in this reference 1 is characterized as follows. To prevent interference between one radio station belonging to a given radio link and the other radio station belonging to another radio link in a single radio communication system, each radio station transmits/receives a control packet upon forming a new radio link. When a given radio station receives a control packet from another radio station, the radio station determines that the corresponding channel is used by the other radio station in the same radio communication system, and selects a channel for which a control packet from another radio station is not received, thereby preventing interference with other radio stations in the same radio communication system.

In the radio LAN system, in communication between radio stations belonging to different radio links, when the two radio links are connected to a single wire network via base stations and the like, the radio station on the transmitting side transmits a packet to a base station connected to the radio link to which the self-station belongs, and the base station transfers the packet to a base station connected to the radio link to which the radio station on the receiving side belongs via the wire network. The base station connected to the radio link to which the radio station on the receiving side belongs transmits the packet to the radio station on the receiving side, thereby implementing communication.

In the conventional systems, no consideration is given to communication between radio links using different channels. For this reason, in a radio packet communication system like the radio LAN system described above, communication cannot be efficiently performed.

According to the channel selection method described in reference 1 and the like, different channels are used for adjacent radio links. When two radio stations belonging to the respective radio channels are to communicate with each other, they cannot directly communicate with each other, because they use different channels, regardless of whether they are located at a distance from each other within which direction communication is allowed.

In addition, as described above, although communication can be performed via a wire network in some cases, when, for example, two radio stations belong to radio links to which no base stations are connected or base stations, if any, are connected to different wire networks, the two radio stations cannot communicate with each other. In some cases, therefore, in a radio packet communication system like the radio LAN system described above, even radio stations that are otherwise capable of direction communication cannot communicate with other by using the conventional radio communication apparatus.

In communication via a wire network, as described above, since communication between radio stations and base stations is performed via two radio links, the radio channel usage is twice that for direct communication. Therefore, when radio stations belonging to different radio links communicate with each other, the number of used channels doubles as compared with the case of direct communication.

Some non-WLAN network structures are known having specific architectures which allow for a direct communication between radio stations. For example, in Z. J. Haas: "On the performance of a medium access control scheme for the reconfigurable wireless networks" (MILCOM 97 PROCEEDINGS MONTEREY, CA, USA, 2-5 NOV. 1997, NEW YORK, NY, USA, IEEE, US, vol. 3, 2 November 1997, pages 1558-1564), wireless ad-hoc networks are described in which registration of new radio stations in an (existing) network system is carried out using a polling procedure for which all radio stations periodically scan all available frequencies in order to find polling messages periodically sent by new neighbouring radio stations which are not yet in the registration database of the respective radio station. In EP-A-0 737 018, a wireless cellular network system is described which includes a wireless sub-network of computers or notebooks. The sub-network is organized as a dynamic ad-hoc network which uses only one radio channel for communication in the cellular network at a time. In this network, any radio station can act as an "extended" access point.

Moreover, a protocol for radio subsystems in a communication system is known from "Universal Mobile Telecommunications System (UMTS); UMTS Terrestrial Radio Access (UTRA); Concept evaluation (UMTS 30.06 version 3.0.0)" (TR 101 146 V3.0.0, December 1997, pages 144-172). Using this protocol, dynamically changing multiple communication paths between communication nodes are provided when employing the radio subsystems as relays, thus enabling reducing the transmission power or increasing the transmission rate since difficult radio paths can be broken down into a sequence of shorter hops. In order to reduce the transmission power or to increase the transmission rate within ad-hoc networks with dynamically changing routing paths, a further routing protocol for mobile hosts acting as routers is suggested by C.-K. Toh: "ASSOCIATIVITY-BASED ROUTING FOR AD-HOC MOBILE NETWORK" (WIRELESS PERSONAL COMMUNICATION, KLUWER ACADEMIC PUBLISHERS, NL, vol. 4, no. 2, March 1997, pages 103-139).

### DISCLOSURE OF INVENTION:

The present invention has been made in consideration of the above situation, and has as its object to provide a radio communication apparatus in a radio packet communication system, in which when a given radio station belonging to a given radio link transmits a packet to a radio station belonging to a different radio link, if this remote radio station is located at a distance within which direction communication is allowed, the packet is transmitted by using the channel used by the remote radio station to increase the probability of communication between radio stations, and the packet is directly transmitted to the remote radio station to reduce the number of used channels.

In order to achieve the above object, according to the first aspect of the present invention, there is provided a radio communication apparatus with the features of claim 1.

According to the second aspect of the present invention, there is provided a radio communication apparatus in a radio packet communication system, characterized by comprising a section for searching and determining whether a channel used by a destination radio station is registered, wherein if the channel used by the destination radio station for a transmission packet is not registered, the packet is transmitted via a channel used by a self-station.

According to the third aspect of the present invention, there is provided a radio communication apparatus in a radio packet communication system, characterized by comprising a section for notifying that a self-station cannot receive any packet, and a section for notifying that the self-station can receive a packet after a packet is transmitted, wherein a remote radio station can be notified whether the self-station can receive a packet.

According to the fourth aspect of the present invention, there is provided a radio communication apparatus in a radio packet communication system, characterized by comprising a section capable of performing communication by simultaneously using two channels, wherein communications can be simultaneously performed by using the two channels.

According to the fifth aspect of the present invention, there is provided a radio communication apparatus in a radio packet communication system, characterized by comprising a section for searching for a channel used by a destination radio station and registering the found channel, wherein the channel used by the destination radio station for a packet to be transmitted can become known.

According to the sixth aspect of the present invention, there is provided a radio communication apparatus in a radio packet communication system, characterized by comprising a section for searching for a channel by transmitting/receiving a control packet at the time of a channel search, wherein a channel used by a destination radio station for a packet to be transmitted can become known.

According to the respective aspects of the present invention, the following advantages can be obtained.

Since this apparatus has means for performing direct communication by using a channel used by a destination radio station for a transmission packet, the apparatus can directly communicate with a radio station which belongs to a radio link using a different channel. This makes it possible to reduce the number of used channels and implement efficient communication.

If the channel used by a destination radio station for a transmission packet is not registered, a packet can be transmitted by using the channel used by the self-station as in the conventional radio communication apparatus. Even if, therefore, a channel is not registered, performance equivalent to that of the conventional radio communication apparatus can be provided.

In addition, when the self-station notifies a remote station that it cannot receive any data, the remote station can delay the transmission of a packet. This makes it possible to reduce losses of packets addressed to the self-station while another channel is used.

When this apparatus has a transmission/reception section for receiving a packet addressed to the self-station and a transmission/reception device for transmitting a packet by using another channel, a packet addressed to the self-station can be received while a packet is transmitted by using another channel, thereby reducing packet losses while packets are transmitted by using another channel.

Furthermore, since the channel used by a destination radio channel for a transmission packet can be automatically searched out and registered, even if the channel used by the destination radio channel for a transmission packet is not registered, a packet can be transmitted by using the channel used by the destination radio station.

The above and many other objects, aspects, and advantages of the present invention will be apparent to those skilled in the art by the following detailed description of the preferred embodiments conforming to the principle of the present invention in conjunction with the accompanying drawings.

### BRIEF DESCRIPTION OF DRAWINGS:

Fig. 1 is a block diagram showing the schematic arrangement of the first embodiment of the present invention;
Fig. 2 is a flow chart showing the transmitting operation of a radio communication apparatus according to the present invention;
Fig. 3 is a flow chart showing detailed operation in a channel selection procedure in Fig. 2;
Fig. 4 is a flow chart showing detailed operation in a packet transmission procedure using a selected channel in Fig. 2;
Fig. 5 is a block diagram showing the schematic arrangement of the second embodiment of the present invention;
Fig. 6 is a flow chart showing detailed operation in a packet transmission procedure according to the second embodiment of the present invention;
Fig. 7 is a block diagram showing the schematic arrangement of the third embodiment of the present invention;
Fig. 8 is a flow chart showing detailed operation in a channel selection procedure according to the third embodiment of the present invention;
Fig. 9 is a flow chart showing detailed operation in a channel search procedure in Fig. 8;
Fig. 10 is a block diagram showing the schematic arrangement of the fourth embodiment of the present invention; and
Fig. 11 is a flow chart showing detailed operation in a channel search procedure according to the fourth embodiment of the present invention.

### BEST MODE OF CARRYING OUT THE INVENTION:

Several preferred embodiments of the present invention will be described in detail below with reference to the accompanying drawings. Assume that in each embodiment, each radio station has a unique address, and a transmission packet as data to be transmitted contains the address of a destination radio station.

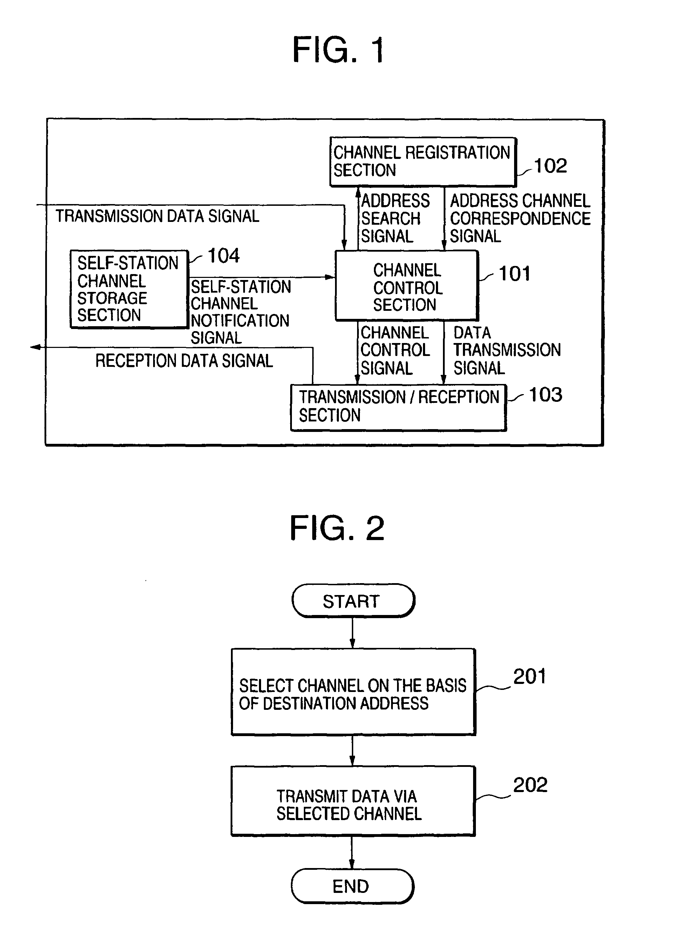

Fig. 1 is a block diagram showing the schematic arrangement of the first embodiment of the present invention. A radio communication apparatus of the first embodiment of the present invention comprises a channel control section 101, a channel registration section 102 in which the correspondences between addresses and channels are registered, a transmission/reception section 103 for performing communication by using a radio channel, and a self-station channel storage section 104 storing a channel which the self-station uses for data reception.

When a transmission data signal is input at the time of data transmission, the channel control section 101 notifies the channel registration section 102 of the address signal contained in the transmission data signal by using an address search signal. The channel registration section 102 searches the correspondences between the registered addresses and channels on the basis of the input address signal and notifies the channel control section 101 of the resultant data as an address/channel correspondence signal.

The channel control section 101 notifies the transmission/reception section 103 of a channel control signal on the basis of the input address/channel correspondence signal, and also notifies the transmission/reception section 103 of the transmission data signal.

The transmission/reception section 103 changes the channel on the basis of the channel control signal and transmits the transmission data signal to a radio channel. At the time of data reception, a reception data signal is output from the transmission/reception section 103.

The operation of the first embodiment of the present invention will be described next with reference to Fig. 1 and Figs. 2 to 4 which show flow charts.

At the time of data transmission, as shown in Fig. 2, the channel control section 101 selects a channel used for data transmission by inquiring of the channel registration section 102 about the channel which the radio station corresponding to the destination address in an input transmission data signal is using for reception (step 201), and transmits the data via the selected channel (step 202).

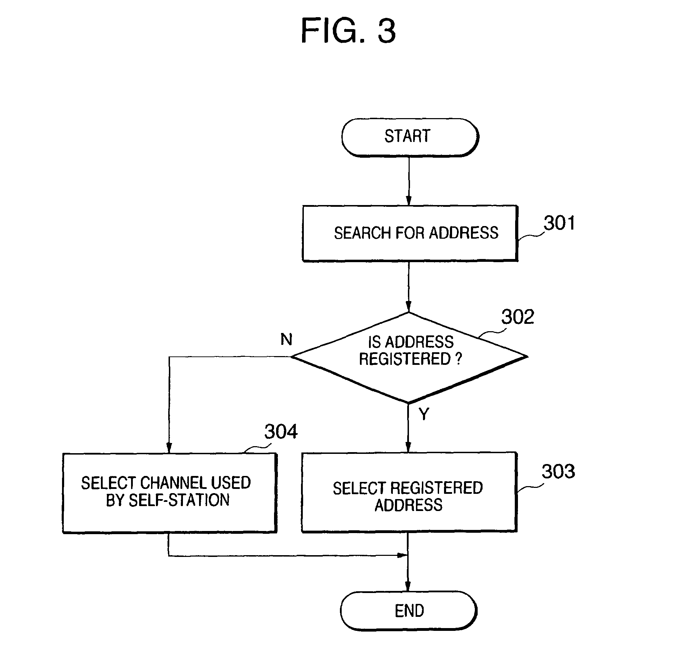

Fig. 3 shows the details of a channel selection procedure based on the destination address in step 201 in Fig. 2. At the time of channel selection, the channel control section 101 searches the correspondences between the registered addresses and channels on the basis of the destination address (step 301). If the corresponding channel is registered in the channel registration section 102 (Y in step 302), the registered channel is selected (step 303). If the corresponding channel is not registered in the channel registration section 102 (NO in step 302), the channel control section 101 selects the channel which the self-station is using for data reception (step 304).

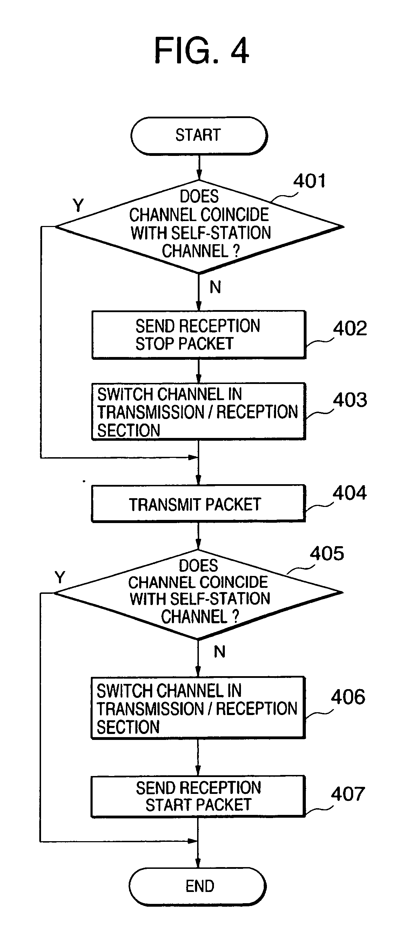

Fig. 4 shows the details of a data transmission procedure in step 202 in Fig. 2. If the channel selected from the channel registration section 102 in step 201 differs from the channel notified by a self-station channel notification signal stored in the self-station channel storage section 104 (N in step 401), the channel control section 101 sends a reception stop package to the remote radio station and also notifies it that the self-station will switch to another channel (step 402). The channel control section 101 then notifies the transmission/reception section 103 of the selected channel to perform channel switching (step 403), and transmits a packet via the selected channel (step 404).

If the selected channel is the same channel as that used by the self-station (Y in step 401), the channel control section 101 transmits a packet via the channel set by notifying the transmission/reception section 103 of transmission data (step 404).

If the selected channel differs from the channel used by the self-station after the end of packet transmission (N in step 405), the channel control section 101 notifies the transmission/reception section 103 of the channel used by the self-station to switch the channel in the transmission/reception section to the channel used by the self-station (step 406), and sends a reception start packet to the remote radio station to notify it that the self-station has resumed reception via the self-station channel (step 407).

If the selected self-station channel is the same as that stored in the self-station channel storage section 104 and used by the self-station (Y in step 405), the channel control section 101 neither performs channel switching processing for switching to the self-station channel nor sends a reception start packet.

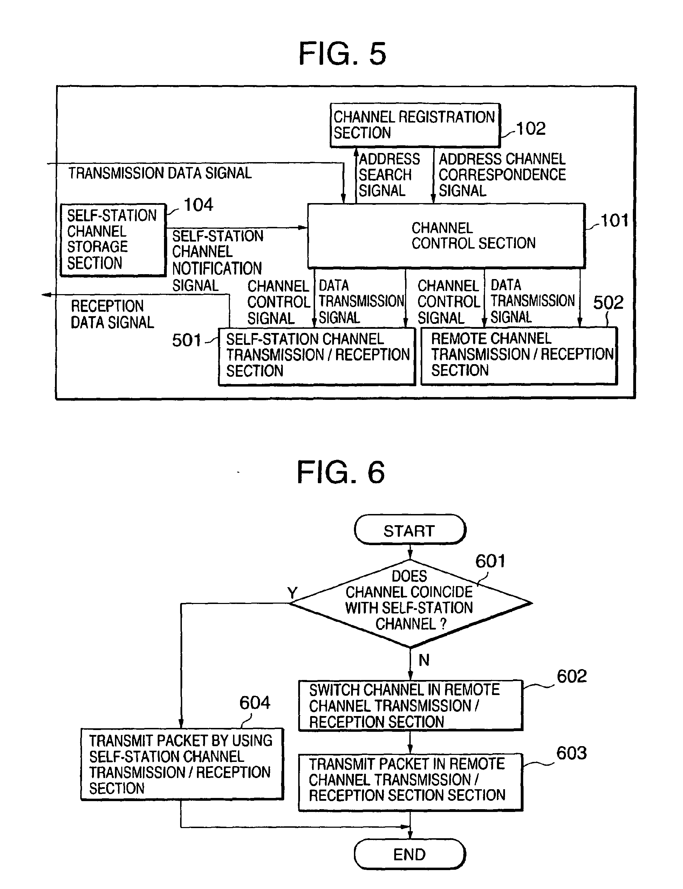

Fig. 5 is a block diagram showing the schematic arrangement of the second embodiment of the present invention. The second embodiment of the present invention is comprised of a self-station channel transmission/reception section 501 and remote channel transmission/reception section 502 in addition to the channel control section 101, channel registration section 102, and self-station channel storage section 104 as in the first embodiment. When transmission/reception is to be performed via the channel used by the self-station, it is done by using the self-station channel transmission/reception section 501. When transmission/reception is to be performed by using a channel other than the channel used by the self-station, it is done by using the remote channel transmission/reception section 502.

The operation of the second embodiment of the present invention will be described next with reference to Fig. 6. Fig. 6 shows detailed operation in the second embodiment, which corresponds to the data transmission procedure in step 202 in Fig. 2.

If the channel selected in step 201 in Fig. 2 differs from the channel used by the self-station (N in step 601), the channel control section 101 notifies the remote channel transmission/reception section 502 of the selected channel to perform channel switching (step 602), and transmits a packet by using the remote channel transmission/reception section 502 (step 603). If the selected channel is the same as that used by the self-station (Y in step 601), the channel control section 101 transmits a packet by using the self-station channel transmission/reception section 501 (step 604).

In the second embodiment, if the channel selected in step 201 differs from the channel notified by a self-station channel notification signal stored in the self-station channel storage section 104, there is no need to send a reception stop packet to the remote radio station and notify it that the self-station will switch channels. This makes it possible to improve the efficiency of transmission/reception processing.

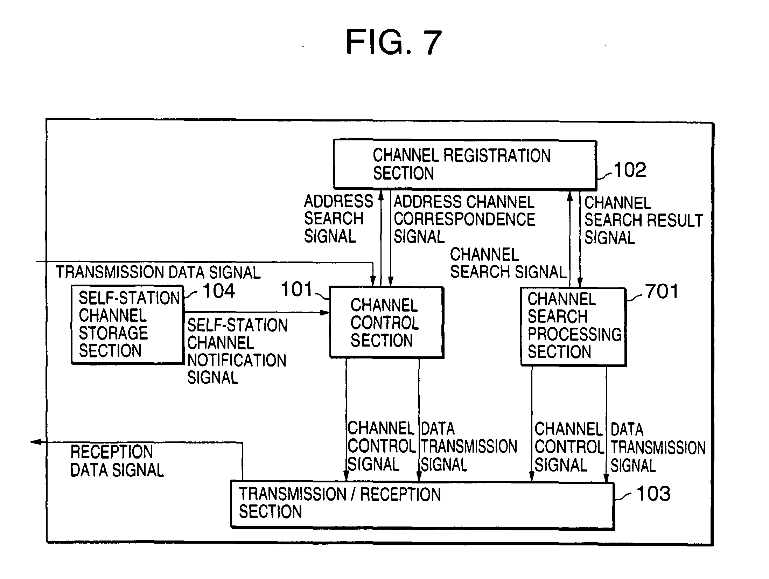

Fig. 7 is a block diagram showing the schematic arrangement of the third embodiment of the present invention. The third embodiment of the present invention is comprised of a channel search processing section 701 in addition to the channel control section 101, channel registration section 102, transmission/reception section 103, and self-station channel storage section 104 as in the first embodiment.

The channel search processing section 701 searches the correspondences, between addresses and channels which are not registered in the channel registration section 102, on the basis of an input address signal. If there is a radio station that has a corresponding destination address, the channel search processing section 701 selects the corresponding channel number and notifies the channel control section 101 of the number as an address/channel correspondence signal. The channel search processing section 701 also registers the correspondence between the destination address and the selected channel number in the channel registration section 102.

If the channel corresponding to the destination address is not registered, the channel registration section 102 notifies the channel search processing section 701 of the corresponding information by using a channel search signal. Upon reception of the channel search signal, the channel search processing section 701 searches for a channel corresponding to the destination address, and notifies the channel registration section 102 of the search result by using a channel search result signal.

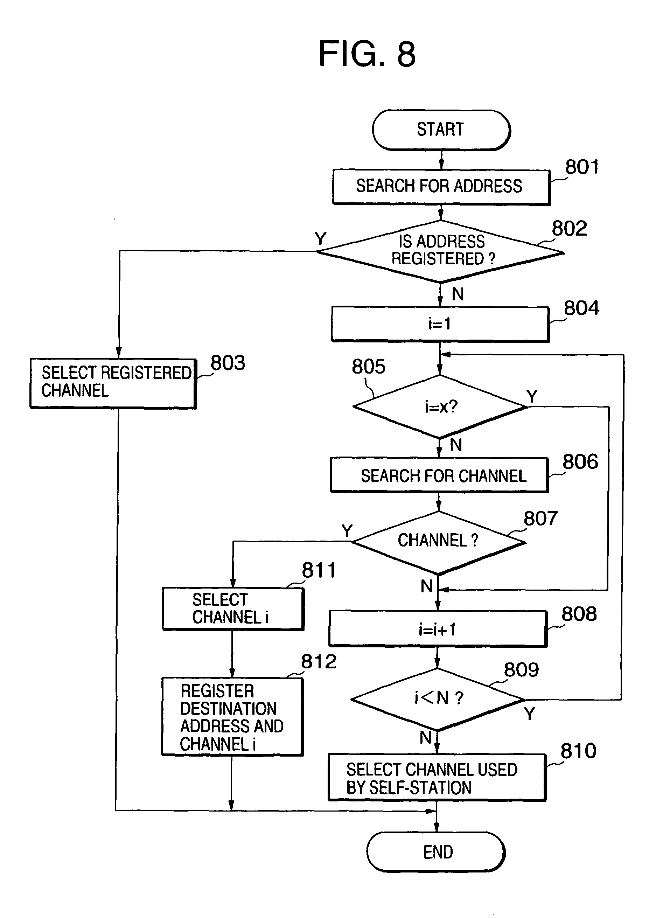

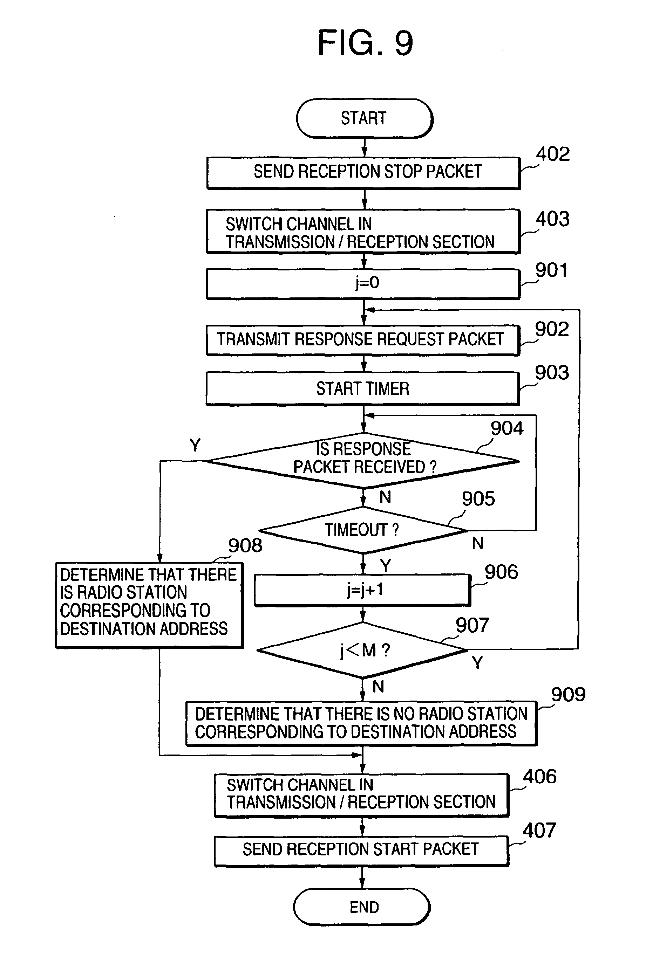

The operation of the third embodiment of the present invention will be described next with reference to Figs. 8 and 9. Note that Fig. 8 shows the details of the operation of the third embodiment, which corresponds to the channel selection procedure based on the destination address in step 201 in Fig. 2.

At the time of channel selection, the channel control section 101 searches the correspondences between the registered addresses and channels on the basis of the destination address (step 801). If the corresponding channel is registered (Y in step 802), the channel control section 101 selects the registered channel (step 803). If the corresponding channel is not registered (N in step 802), i = 1 is set (step 804).

Assume that in the third embodiment, the total number of channels is N, and the numbers 1 to N are assigned to the respective channels. "i" represents the number of a channel undergoing a search. "x" represents the number of the channel used by the self-station. If a channel undergoing a search differs from the channel used by the self-station (N in step 805), the channel control section 101 searches for a radio station having the destination address (step 806).

If it is determined after the search that there is no radio station having the destination address (N in step 807), and the channel undergoing a search is the one used by the self-station (Y in step 805), the channel control section 101 increments the channel number by one (step 808). If it is determined that "i" is equal to or smaller than N and not all the channels have been searched (Y in step 809), the flow returns to step 805 to search the next channel.

If it is determined on the basis of the result from step 808 that "i" becomes larger than N and all the channels have been searched (N in step 809), the channel control section 101 selects the channel which the self-station is using (step 810). If it is determined on the basis of the search result in step 806 that there is a radio station having the destination address (Y in step 807), the channel control section 101 selects the channel having a channel number "i" (step 811), and registers the correspondence between the destination address and the selected channel "i" in the channel registration section 102 (step 812).

Fig. 9 shows the details of operation in the procedure for searching for a radio station having the destination address in step 806 in Fig. 8. In the third embodiment, upon reception of a response request packet, the channel registration section 102 returns a response packet. At the time of a search, the channel control section 101 sends a channel switching packet (step 402), and switches the channel in the transmission/reception section to another (step 403).

The channel control section 101 then sets "j" representing the number of times of retransmission of a control packet to 0 (step 901), transmits a response request packet to the destination address (step 902), and starts a timer (step 903). The channel control section 101 then waits for the reception of a response packet (step 904) until the timer causes a timeout (step 905). When the timer reaches a predetermined value and causes a timeout (Y in step 905), one added to "j" (step 906).

If it is determined that "j" is equal to or less than M (Y in step 907), the flow returns to step 902 to repeatedly transmit the response request packet. In this case, M is a predetermined upper retransmission count limit value. If "j" exceeds the upper retransmission count limit value (N in step 907), it is determined that there is no radio station corresponding to the destination address (step 909).

If a response packet is received before the timer causes a timeout (Y in step 904), it is determined that there is a radio station corresponding to the destination address (step 908), and the flow advances to steps 811 and 812 in Fig. 8. Thereafter, the channel control section 101 switches the channel in the transmission/reception unit to the channel used by the self-station (step 406) and then sends a reception start packet (step 407).

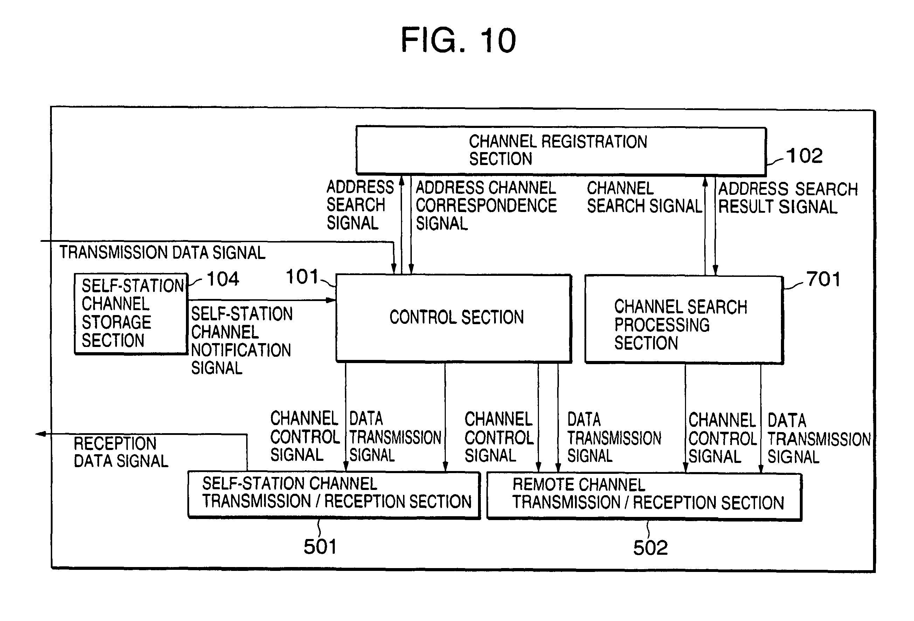

Fig. 10 is a block diagram showing the schematic arrangement of the fourth embodiment of the present invention. The fourth embodiment of the present invention is a combination of the second and third embodiments of the present invention.

The fourth embodiment of the present invention is comprised of the channel control section 101, channel registration section 102, transmission/reception section 103, and self-station channel storage section 104 like those in the first embodiment, the self-station channel transmission/reception section 501 and remote channel transmission/reception section 502 like those in the second embodiment, and the channel search processing section 701 like the one in the third embodiment. The channel search processing section 701 performs search processing for a channel corresponding to a destination address by using the remote channel transmission/reception section 502.

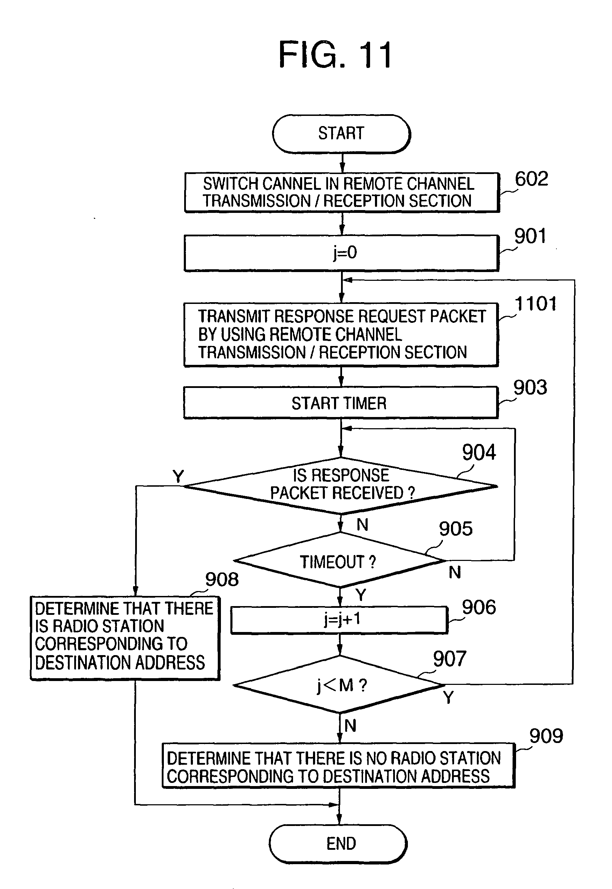

The operation of the fourth embodiment of the present invention will be described next with reference to Fig. 11. Fig. 11 shows the details of operation in the procedure for searching for a radio station having the destination address in step 806 in Fig. 8. In the fourth embodiment, upon reception of a response request packet, the channel registration section 102 returns a response packet.

At the time of a search, first of all, the channel control section 101 switches the channel in the remote channel transmission/reception section 502 (step 602). The channel control section 101 then sets "j" representing a control packet retransmission count to 0 (step 901), transmits a response request packet to the destination address by using the remote channel transmission/reception section 502 (step 1101), and starts a timer (step 903).

The channel control section 101 then waits for the reception of a response packet (step 904) until the timer causes a timeout (step 905). When the timer reaches a predetermined value and causes a timeout (Y in step 905), one is added to "j" (step 906). If it is determined that "j" is equal to or less than M (Y in step 907), the flow returns to step 902 to repeatedly transmit the response request packet.

In this case, M is a predetermined upper retransmission count limit value. If "j" exceeds the upper retransmission count limit value (N in step 907), it is determined there is no radio station corresponding to the destination address (step 909). If a response packet is received before the timer causes a timeout (Y in step 904), it is determined that there is a radio station corresponding to the destination address (step 908).

## Claims

1. A radio communication apparatus which is adapted for use in a first radio station in a first radio LAN packet communication system,
the first radio LAN packet communication system being constituted by a first plurality of radio stations and being adapted for communication using a plurality of radio channels, the first plurality of radio stations being adapted to form a first radio link and to share one first radio channel for communication of a radio station with other radio stations in the first radio link using a single radio channel,
said radio communication apparatus being adapted for transmission of a transmission packet between the first radio station and a destination radio station by use of a transmission radio channel, and
said radio communication apparatus comprising:
a channel control section (101) as selection means, which is programmed to select the transmission radio channel based on an address of a destination radio station identified in the transmission packet to be transmitted; and
a transmission means programmed to transmit the transmission packet by using the selected transmission radio channel,
**characterized in that** said radio communication apparatus further comprises:
a channel registration section (102) as a registration means which is programmed to register a remote radio channel used by a remote radio station and an address of said remote radio station, said remote radio channel being different from the first radio channel and said remote radio station belonging to a second radio link which is different from the first radio link;
a search means programmed to search for the radio channel used by the destination radio station if the radio channel used by the destination radio station is not registered and to register the radio channel used by the destination radio station if the radio channel used by the destination radio station is found in this search,
wherein the channel control section (101) is programmed to select the radio channel used by the destination radio station as the transmission radio channel if the destination radio station is a remote radio station and the radio channel used by the destination radio station is a registered remote radio channel and to search for the radio channel used by the destination radio station only if the radio channel used by the destination radio station is not registered, thereby selecting the radio channel used by the destination radio station as the transmission radio channel if the radio channel used by the destination radio station is found in this search and selecting the first radio channel as the transmission radio channel if the channel used by the destination radio station is not found.

2. A radio communication apparatus according to claim 1, **characterized by** further comprising means for, when the transmission radio channel differs from the first radio channel used by the first radio station for data reception, notifying that the first radio station cannot receive any transmission packet, transmitting the transmission packet by using the transmission radio channel, and then notifying that the first radio station can receive a transmission packet.

3. A radio communication apparatus according to claim 1 or 2, **characterized by** further comprising a channel transmission/reception section (501) and a remote channel transmission/reception section (502) for transmitting and receiving the transmission packet.

4. A radio communication apparatus according to any one claims 1 to 3, **characterized in that** said search means arc programmed to search for the radio channel used by the destination radio station by transmitting and receiving a control packet at the time of a radio channel search.

5. A radio communication apparatus according to any one of claims 1 to 4 wherein the channel registration section (102) is programmed to store the address of said remote radio station and the associated radio channel used by said remote radio station, and the transmission means is a radio transceiver programmed to transmit the transmission packet using the transmission radio channel if the address of said destination radio station is stored.

## Patentansprüche

1. Funkkommunikationsvorrichtung, die zur Verwendung in einer ersten Funkstation in einem ersten Funk-LAN-Paketkommunikationssystem eingerichtet ist,
wobei sich das erste Funk-LAN-Paketkommunikationssystem aus einer ersten Mehrzahl an Funkstationen zusammensetzt und zur Kommunikation unter Verwenden einer Mehrzahl an Funkkanälen eingerichtet ist, wobei die erste Mehrzahl an Funkstationen eingerichtet ist, um eine erste Funkverbindung zu bilden und um einen ersten Funkkanal zur Kommunikation einer Funkstation mit anderen Funkstationen in der ersten Funkverbindung unter Verwenden eines einzigen Funkkanals zu teilen,
wobei die Funkkommunikationsvorrichtung zur Übertragung eines Übertragungspakets zwischen der ersten Funkstation und einer Zielfunkstation durch Verwendung eines Übertragungsfunkkanals eingerichtet ist, und
wobei die Funkkommunikationsvorrichtung Folgendes umfasst:
einen Kanalsteuerungsabschnitt (101) als Auswahlmittel, das programmiert ist, um den Übertragungsfunkkanal auf der Grundlage einer Adresse einer in dem zu übertragenden Übertragungspaket identifizierten Zielfunkstation auszuwählen; und
ein Übertragungsmittel, das programmiert ist, um das Übertragungspaket unter Verwenden des ausgewählten Übertragungsfunkkanals zu übertragen,
**dadurch gekennzeichnet, dass** die Funkkommunikationsvorrichtung ferner Folgendes umfasst:
einen Kanalregistrierungsabschnitt (102) als ein Registrierungsmittel, das programmiert ist, um einen entfernten Funkkanal, der von einer entfernten Funkstation verwendet wird, und eine Adresse der entfernten Funkstation zu registrieren, wobei der entfernte Funkkanal von dem ersten Funkkanal verschieden ist und die entfernte Funkstation zu einer zweiten Funkverbindung gehört, die von der ersten Funkverbindung verschieden ist;
ein Suchmittel, das programmiert ist, um den Funkkanal zu suchen, der von der Zielfunkstation verwendet wird, wenn der Funkkanal, der von der Zielfunkstation verwendet wird, nicht registriert ist, und um den Funkkanal, der von der Zielfunkstation verwendet wird, zu registrieren, wenn der Funkkanal, der von der Zielfunkstation verwendet wird, bei dieser Suche gefunden wird,
wobei der Kanalsteuerungsabschnitt (101) programmiert ist, um nach dem Funkkanal, der von der Zielfunkstation verwendet wird, als den Übertragungsfunkkanal auszuwählen, wenn die Zielfunkstation eine entfernte Funkstation ist und der Funkkanal, der von der Zielfunkstation verwendet wird, ein registrierter entfernter Funkkanal ist, und um nach dem Funkkanal, der von der Zielfunkstation verwendet wird, nur dann zu suchen, wenn der Funkkanal, der von der Zielfunkstation verwendet wird, nicht registriert ist, wobei der Funkkanal, der von der Zielfunkstation verwendet wird, als der Übertragungsfunkkanal ausgewählt wird, wenn der Funkkanal, der von der Zielfunkstation verwendet wird, bei dieser Suche gefunden wird, und der erste Funkkanal als der Übertragungsfunkkanal ausgewählt wird, wenn der Kanal, der von der Zielfunkstation verwendet wird, nicht gefunden wird.

2. Funkkommunikationsvorrichtung nach Anspruch 1, **dadurch gekennzeichnet, dass** sie überdies Mittel umfasst, um, wenn der Übertragungsfunkkanal von dem ersten Funkkanal verschieden ist, der von der ersten Funkstation zum Datenempfang verwendet wird, zu melden, dass die erste Funkstation kein Übertragungspaket empfangen kann, das Übertragungspaket unter Verwenden des Übertragungsfunkkanals zu übertragen, und dann zu melden, dass die erste Funkstation ein Übertragungspaket empfangen kann,.

3. Funkkommunikationsvorrichtung nach Anspruch 1 oder 2, **dadurch gekennzeichnet, dass** sie überdies einen Kanalübertragungs-/-empfangsabschnitt (501) und einen entfernten Kanalübertragungs-/-empfangsabschnitt (502) zum Übertragen und Empfangen des Übertragungspakets umfasst.

4. Funkkommunikationsvorrichtung nach einem der Ansprüche 1 bis 3, **dadurch gekennzeichnet, dass** die Suchmittel programmiert sind, um nach dem Funkkanal, der von der Zielfunkstation verwendet wird, durch Übertragen und Empfangen eines Steuerpakets zu dem Zeitpunkt einer Funkkanalsuche zu suchen.

5. Funkkommunikationsvorrichtung nach einem der Ansprüche 1 bis 4, wobei der Kanalregistrierungsabschnitt (102) programmiert ist, um die Adresse der entfernten Funkstation und den zugehörigen Funkkanal, der von der entfernten Funkstation verwendet wird, zu speichern, und das Übertragungsmittel ein Funktransceiver ist, der programmiert ist, um das Übertragungspaket unter Verwenden des Übertragungsfunkkanals zu übertragen, wenn die Adresse der Zielfunkstation gespeichert ist.

## Revendications

1. Dispositif de radiocommunication qui est adapté pour une utilisation dans une première station radio dans un premier système de communication en mode paquet de réseau local radio,
le premier système de communication en mode paquet de réseau local radio étant constitué par une première pluralité de stations radio et étant adapté pour communiquer en utilisant une pluralité de canaux radio, la première pluralité de stations radio étant adaptées pour former une première liaison radio et pour partager un premier canal radio pour la communication d'une station radio avec d'autres stations radio sur la première liaison radio en utilisant un canal radio unique,
ledit dispositif de radiocommunication étant adapté pour transmettre un paquet de transmission entre la première station radio et une station radio de destination en utilisant un canal de transmission radio, et
ledit dispositif de radiocommunication comprenant:
une section de contrôle de canal (101) en tant que moyens de sélection, qui est programmée pour sélectionner le canal de transmission radio sur la base d'une adresse d'une station radio de destination identifiée dans le paquet de transmission à transmettre ; et
des moyens de transmission programmés pour transmettre le paquet de transmission en utilisant le canal de transmission radio sélectionné,
**caractérisé en ce que** ledit dispositif de radiocommunication comprend en outre :
une section d'enregistrement de canal (102) en tant que moyens d'enregistrement qui est programmée pour enregistrer un canal radio à distance utilisé par une station radio à distance et une adresse de ladite station radio à distance, ledit canal radio à distance étant différent du premier canal radio et ladite station radio à distance appartenant à une deuxième liaison radio qui est différente de la première liaison radio ;
des moyens de recherche programmés pour rechercher le canal radio utilisé par la station radio de destination si le canal radio utilisé par la station radio de destination n'est pas enregistré et pour enregistrer le canal radio utilisé par la station radio de destination si le canal radio utilisé par la station radio de destination est trouvé au cours de cette recherche,
dans lequel la section de contrôle de canal (101) est programmée pour sélectionner le canal radio utilisé par la station radio de destination en tant que canal de transmission radio si la station radio de destination est une station radio à distance et si le canal radio utilisé par la station radio de destination est un canal radio à distance enregistré et pour rechercher le canal radio utilisé par la station radio de destination uniquement si le canal radio utilisé par la station radio de destination n'est pas enregistré, sélectionnant de ce fait le canal radio utilisé par la station radio de destination en tant que canal de transmission radio si le canal radio utilisé par la station radio de destination est trouvé au cours de cette recherche et sélectionnant le premier canal radio en tant que canal de transmission radio si le canal utilisé par la station radio de destination n'est pas trouvé.

2. Dispositif de radiocommunication selon la revendication 1, **caractérisé en ce qu'**il comprend en outre des moyens pour, lorsque le canal de transmission radio diffère du premier canal radio utilisé par la première station radio pour la réception de données, signaler que la première station radio ne peut pas recevoir de paquet de transmission, transmettre le paquet de transmission en utilisant le canal de transmission radio, et signaler ensuite que la première station radio peut recevoir un paquet de transmission.

3. Dispositif de radiocommunication selon la revendication 1 ou 2, **caractérisé en ce qu'**il comprend en outre une section de transmission/réception de canal (501) et une section de transmission/réception de canal à distance (502) pour transmettre et recevoir le paquet de transmission.

4. Dispositif de radiocommunication selon l'une quelconque des revendications 1 à 3, **caractérisé en ce que** lesdits moyens de recherche sont programmés pour rechercher le canal radio utilisé par la station radio de destination en transmettant et recevant un paquet de contrôle à l'instant d'une recherche de canal radio.

5. Dispositif de radiocommunication selon l'une quelconque des revendications 1 à 4, dans lequel la section d'enregistrement de canal (102) est programmée pour mémoriser l'adresse de ladite station radio à distance et le canal radio associé utilisé par ladite station radio à distance, et les moyens de transmission consistent en un émetteur-récepteur radio programmé pour transmettre le paquet de transmission en utilisant le canal de transmission radio si l'adresse de ladite station radio de destination est mémorisée.
